(19) Europäisches Patentamt
European Patent Office
Office européen des brevets

(11) **EP 4 648 132 A1**

(12) **EUROPEAN PATENT APPLICATION**

(43) Date of publication:
**12.11.2025 Bulletin 2025/46**

(21) Application number: **25175151.7**

(22) Date of filing: **08.05.2025**

(51) International Patent Classification (IPC):
*H01M 4/38* $^{(2006.01)}$       *H01M 4/133* $^{(2010.01)}$
*C01B 25/00* $^{(2006.01)}$       *H01M 4/134* $^{(2010.01)}$
*H01M 4/36* $^{(2006.01)}$       *H01M 4/587* $^{(2010.01)}$
*H01M 4/62* $^{(2006.01)}$       *H01M 10/0525* $^{(2010.01)}$
*C01B 32/05* $^{(2017.01)}$       *C01B 33/027* $^{(2006.01)}$
*H01M 4/02* $^{(2006.01)}$

(52) Cooperative Patent Classification (CPC):
**H01M 4/133; C01B 32/05; C01B 33/027;
H01M 4/134; H01M 4/364; H01M 4/366;
H01M 4/386; H01M 4/587; H01M 4/625;
H01M 10/0525;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.05.2024   KR 20240060542**

(71) Applicants:
• **SK On Co., Ltd.**
  **Seoul 03161 (KR)**
• **SK innovation Co., Ltd.**
  **Seoul 03188 (KR)**

(72) Inventors:
• **YANG, Young Mo**
  **34124 Daejeon (KR)**
• **LA, Yun Ji**
  **34124 Daejeon (KR)**
• **PARK, Gwi Ok**
  **34124 Daejeon (KR)**
• **PARK, Se Eun**
  **34124 Daejeon (KR)**

(74) Representative: **Stolmár & Partner**
**Patentanwälte PartG mbB**
**Blumenstraße 17**
**80331 München (DE)**

(54) **ANODE ACTIVE MATERIAL FOR LITHIUM SECONDARY BATTERY, METHOD OF PREPARING THE SAME AND LITHIUM SECONDARY BATTERY INCLUDING THE SAME**

(57)    An anode active material for a lithium secondary battery according to the embodiments of the present disclosure includes composite particles comprising carbon-based particles and silicon-containing particles including silicon and hydrogen disposed on the surface of the carbon-based particles and an H/Si ratio of the composite particles, defined by Equation 2, is 0.5% to 5.3%.

[FIG. 1]

**Description**

[BACKGROUND OF THE INVENTION]

1. Field of the Invention

The present disclosure relates to an anode active material for a lithium secondary battery, a method of preparing the same, and a lithium secondary battery including the anode active material.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Recently, as subjects, to which the lithium secondary battery is applied, are expanded, development for a lithium secondary battery having a higher capacity and output is progressing. For example, a composite compound of silicon and carbon having high capacity may be prepared and used for an anode active material.

However, since a silicon-carbon composite anode active material has a large difference in volume expansion rate, cracks in the anode active material and exposure to an electrolyte may occur due to repeated charging and discharging cycles.

[SUMMARY OF THE INVENTION]

An object of the present disclosure is to provide an anode active material for a lithium secondary battery with improved lifespan characteristics and a method for preparing the anode active material for a lithium secondary battery.

Another object of the present disclosure is to provide a lithium secondary battery with improved lifespan characteristics.

An anode active material for a lithium secondary battery according to exemplary embodiment of the present disclosure may include: composite particles which comprise carbon-based particles and silicon-containing particles including silicon and hydrogen disposed on the surface of the carbon-based particles. An H/Si ratio of the composite particle, defined by Equation 2 below, may be 0.5% to 5.3%:

[Equation 2]

$$\frac{\text{H}}{\text{Si}} \text{ ratio } (\%) = \frac{R_H}{R_{Si}} \times 100.$$

In Equation 2, $R_H$ may represent a content (% by weight) of hydrogen based on a total weight of the composite particles, and $R_{Si}$ may represent a content (% by weight) of silicon based on the total weight of the composite particles.

In some embodiments, the H/Si ratio may be 1.2% to 4.9%.

In some embodiments, the content of silicon, based on the total weight of the composite particles, may be 41 wt% to 55 wt%.

In some embodiments, the content of hydrogen, based on the total weight of the composite particles, may be 0.3 wt% to 2.7 wt%.

In some embodiments, the silicon-containing particles may include $SiH_x$ ($0 < x \leq 4$).

In some embodiments, the silicon-containing particles may include an amorphous silicon-based material, and the carbon-based particles may have an amorphous structure.

In some embodiments, the carbon-based particles may include pores.

In some embodiments, the pores of the carbon-based particles may have a shape which is recessed from the outermost portion of the carbon-based particles into an interior of the carbon-based particles.

In some embodiments, the surface of the carbon-based particles may include an outer surface and/or an inner surface of the carbon-based particles.

In some embodiments, the composite particles may further include a carbon coating disposed on the carbon-based particles and/or silicon-containing particles.

A lithium secondary battery according to exemplary embodiment of the present disclosure may include: an anode which includes the above-described anode active material for a secondary battery; and a cathode disposed to face the anode.

A method for preparing an anode active material for a lithium secondary battery according to exemplary embodiment of the present disclosure may include: preparing carbon-based particles by performing a first heat treatment on a carbon source; and forming composite particles by calcining the carbon-based particles and a silicon-based source containing silicon and hydrogen at 400 °C to 550 °C for 8 to 16 hours.

In some embodiments, the silicon-based source may include a compound represented Formula 1 below:

$$[Formula\ 1] \qquad SiH_wX_{1-w}.$$

In Formula 1, X may be a halogen element, and w may be in a range of $0<w\leq4$.

In some embodiments, the silicon-based source may include at least one of silane ($SiH_4$) and trichlorosilane ($SiHCl_3$).

In some embodiments, the step of forming composite particles may further include performing a dehydrogenation reaction after the calcination.

In some embodiments, the dehydrogenation reaction may further include performing a second heat treatment within a reactor, wherein the second heat treatment may be performed under conditions where a hydrogen content in a total volume within the reactor is 0.1 vol% or less.

The lithium secondary battery according to the exemplary embodiments of the present disclosure may mitigate a decrease in lifespan characteristics by the expansion of the silicon-based material.

The anode active material according to the exemplary embodiments may suppress side reactions with the electrolyte during charge and discharge cycles. As a result, the lifespan characteristics and high-temperature characteristics of the lithium secondary battery including the anode active material may be simultaneously improved.

The anode active material for a lithium secondary battery of the present disclosure, the method for preparing the same, and the lithium secondary battery including the same may be widely applied in green technology fields, such as electric vehicles, battery charging stations, as well as solar power generation, wind power generation, and the like, which use the batteries. The anode active material for a lithium secondary battery of the present disclosure, the method for preparing the same, and the lithium secondary battery including the same may be used in eco-friendly electric vehicles, hybrid vehicles, and the like, which are aimed at mitigating climate change by reducing air pollution and greenhouse gas emission.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic cross-sectional view illustrating a composite particle according to exemplary embodiments;
FIGS. 2 and 3 are schematic flowcharts for describing processes of a method for preparing an anode active material for a lithium secondary battery according to exemplary embodiments; and
FIGS. 4 and 5 are a schematic plan view and a cross-sectional view illustrating a lithium secondary battery according to exemplary embodiments, respectively.

[DETAILED DESCRIPTION OF THE INVENTION]

The embodiments of the present disclosure provide an anode active material for a lithium secondary battery (hereinafter, may be abbreviated as an "anode active material") including composite particles containing silicon (Si), hydrogen (H) and carbon (C). In addition, a lithium secondary battery (hereinafter, may be abbreviated as a "secondary battery") including the anode active material is provided.

Hereinafter, the embodiments of the present disclosure will be described in detail with reference to the accompanying drawings. However, these embodiments are merely examples, and the present disclosure is not limited to the specific embodiments described as the examples.

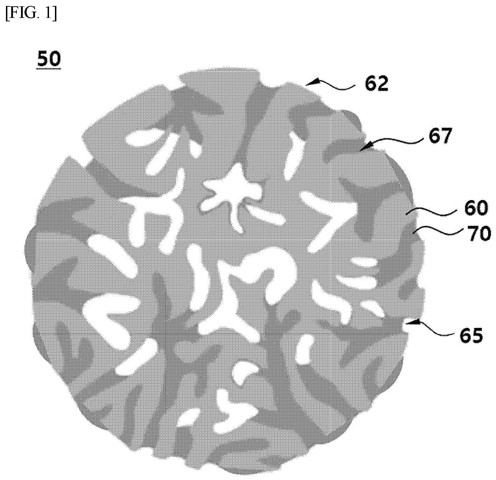

FIG. 1 is a schematic cross-sectional view illustrating a composite particle according to exemplary embodiments.

FIG. 1 schematically illustrates a shape of the composite particle for the convenience of description, but the structure/shape of the composite particle of the present disclosure are not limited to those shown in FIG. 1. For example, the cross-section of the carbon-based particle may be randomly changed from a circle. In addition, a silicon-containing particles may be partially formed on the pores and the surface of the carbon-based particles, and may be formed as a plurality of discontinuous islands or patterns.

Referring to FIG. 1, a composite particle 50 may include carbon-based particles 60 including carbon (C), and silicon-containing particles 70 including silicon (Si) and hydrogen (H).

The carbon-based particle 60 may include pores 65. For example, the carbon-based particle 60 may be a porous particle including a plurality of pores (65).

In some embodiments, the carbon-based particle 60 may include porous carbons such as activated carbon, carbon nanotubes (CNTs), carbon nano-wires, graphene, carbon fibers, carbon black, graphite, microporous carbon, mesoporous carbon, and macroporous carbon, pyrolyzed cryogel, pyrolyzed xerogel, and pyrolyzed aerogel, etc. For example, the carbon-based particles 60 may include a carbon-based material derived from biomass source. These may be used alone or in combination of two or more thereof.

In some embodiments, the carbon-based particles 60 may be carbon with an amorphous structure. Examples of the amorphous carbon may include hard carbon, soft carbon, coke mesocarbon microbeads (MCMBs), mesophase pitch-based carbon fibers (MPCFs), etc. Accordingly, the durability of the composite particles 50 may increase, thereby suppressing crack generation during charging and discharging or when subjected to external impacts. This, in turn, may improve the lifespan characteristics of the secondary battery.

According to exemplary embodiments, the silicon-containing particle 70 may include silicon (Si) and hydrogen (H).

In some embodiments, the silicon-containing particle 70 may include $SiH_x$ ($0<x\leq4$). For example, the $SiH_x$ ($0<x\leq4$) may be included in a lower content than the carbon-based particle 60. Accordingly, the silicon-containing particles 70 can be densely filled within the carbon-based particle 60 even at a low temperature, and the decrease in the lifespan characteristics caused by an increase in the content of the $SiH_x$ ($0<x\leq4$) may be suppressed.

In some embodiments, the silicon-containing particle 70 may include a silicon-based material with an amorphous structure. For example, the silicon-containing particle 70 may include an amorphous silicon-based compound. For example, the silicon-containing particle 70 may be silicon with an amorphous structure. As a result, the lifespan characteristics of the battery may be improved under a high temperature environment or during repeated charging and discharging cycles.

The term "amorphous silicon-based material," "amorphous silicon-based compound" or "amorphous silicon" as used herein may refer to a case where the single silicon located within the particle has an amorphous shape or a case, for example, the silicon is in the form of fine particles so small that it is difficult to measure their size using the Scherrer equation represented by Equation 1 below.

[Equation 1]

$$L = \frac{0.9\lambda}{\beta cos\theta}$$

In Equation 1, L represents a grain size (nm), $\lambda$ represents an X-ray wavelength (nm), $\beta$ represents a full width at half maximum (rad) of the corresponding peak, and $\theta$ represents a diffraction angle (rad). According to exemplary embodiments, the full width at half maximum in the XRD analysis for grain size measurement may be obtained from the peak of (111) plane of silicon included in the silicon-containing particles.

In some embodiments, a ratio of an intensity of amorphous silicon (a-Si) to an intensity of crystalline silicon (c-Si) in a spectrum of the silicon-containing particle 70 obtained using Raman spectroscopy may be greater than 0 and 1 or less, 0.35 to 0.7, 0.45 to 0.7, or 0.45 to 0.65. Within the above range, the silicon-containing particles 70 may classified as an amorphous silicon-based compound, and the lifespan characteristics under the high temperature environment or during repeated charging and discharging cycles may be further improved.

In some embodiments, silicon-containing particles 70 may be disposed on the surface of carbon-based particles 60 having pores 65. These pores 65 may help alleviate the volume expansion of silicon included in the silicon-containing particles 70. As a result, cracks caused by the difference in volume expansion rates between carbon (e.g., about 150 vol% or less) and silicon (e.g., about 400 vol% or more) during charging and discharging of the battery may be prevented, while still utilizing the relatively high capacity characteristics of silicon. Accordingly, gas generation due to side reactions between the anode active material and the electrolyte may be suppressed, leading to improved lifespan characteristics of the secondary battery.

In some embodiments, the pores 65 within the carbon-based particle 60 may have a shape which is recessed from the outermost portion of the carbon-based particle 60 into an interior of the carbon-based particle 60. For example, the pores 65 may include open pores which are exposed to an exterior of the carbon-based particle 60.

As used herein, the terms "surface of the carbon-based particle" and/or "surface of the carbon-based particle 60" may include an outer surface and/or an inner surface of the carbon-based particle.

In some embodiments, the "surface of the carbon-based particle" and/or "surface of the carbon-based particle 60" may refer to an outer surface 62 of the carbon-based particle 60, an inner surface 67 of the pore 65, or both the outer surface 62 of the carbon-based particle 60 and the inner surface 67 of the pore 65.

For example, the silicon-containing particles 70 may be disposed on at least a portion of the outer surface 62 of the carbon-based particles 60.

For example, the silicon-containing particles 70 may be disposed on at least a portion of the inner surface 67 of the pores 65 within the carbon-based particles 60.

For example, the silicon-containing particles 70 may be disposed on at least a portion of the outer surface 62 of the carbon-based particles 60 and at least a portion of the inner surface 67 of the pores 65.

According to exemplary embodiments, an H/Si ratio of the composite particle 50, defined by Equation 2 below, may be 0.5% to 5.3%.

[Equation 2]

$$\frac{H}{Si} \text{ ratio } (\%) \ = \ \frac{R_H}{R_{Si}} \times 100$$

In Equation 2, $R_H$ may be a content (% by weight ("wt%")) of hydrogen based on the total weight of the composite particles 50. For example, $R_H$ may be the content (wt%) of hydrogen based on the total weight of the composite particles 50 measured using Oxygen/Nitrogen/Hydrogen analysis (ONH analysis).

In Equation 2, $R_{Si}$ may be a content (wt%) of silicon based on the total weight of the composite particles 50. For example, $R_{Si}$ may be the content (wt%) of silicon based on the total weight of the composite particles 50 measured using Inductively Coupled Plasma-Optical Emission Spectroscopy (ICP-OES).

If the H/Si ratio of the composite particle 50 is less than 0.5%, the silicon-containing particles 70 may be disposed at a high temperature. For example, when silicon-containing particles are placed on carbon-based particles 60 at a high temperature, the H/Si ratio may reduce. When silicon-containing particles are placed at a high temperature, the crystallinity of silicon may increase. Therefore, if the H/Si ratio is less than 0.5%, the lifespan characteristics of the secondary battery may deteriorate due to repeated charging and discharging cycles.

If the H/Si ratio of the composite particle 50 exceeds 5.3%, side reactions between hydrogen and the electrolyte, etc. may occur due to high hydrogen content. These side reactions, which occur during charging and discharging of the secondary battery or under high temperature conditions, cause damage such as cracks in the composite particles 50. Therefore, if the H/Si ratio exceeds 5.3%, the lifespan characteristics and high-temperature characteristics of the secondary battery may deteriorate due to repeated charging and discharging cycles.

In some embodiments, the H/Si ratio of the composite particles 50, represented by Equation 2, may be 0.6% to 5.1%, 0.6% to 5%, 1.2% to 4.9%, or 2% to 4.9%. Within the above range, the contents of silicon and hydrogen of the composite particles 50 may be appropriately maintained. As a result, the lifespan characteristics and high temperature characteristics of the battery may be further improved.

In some embodiments, the content of the silicon, based on the total weight of the composite particles 50, may be 41 wt% to 55 wt%, 48 wt% to 53 wt%, 49 wt% to 53 wt%, 50 wt% to 53 wt%, or 51 wt% to 53 wt%. Within the above content range, the electrical characteristics such as the charge and discharge capacities of the secondary battery may be improved by the high energy density of the silicon. At the same time, the volume expansion may be appropriately suppressed by the carbon-based particles 60, thereby improving the lifespan characteristics and high-temperature characteristics of the battery.

In some embodiments, a content of hydrogen, based on the total weight of the composite particles 50, may be 0.3 wt% to 2.7 wt%, 0.3 wt% to 2.6 wt%, 0.5 wt% to 2.6 wt%, 0.8 wt% to 2.6 wt%, or 1.1 wt% to 2.6 wt%. Within the above content range, the silicon-containing particles 70 may be stably disposed on the surface of the carbon-based particles 60 while densely filling the pores of the carbon-based particles 60. In addition, the silicon-containing particles 70 may be disposed on the surface of the carbon-based particles 60 at a relatively low temperature, thereby reducing the crystallinity of the silicon. As a result, the lifespan characteristics and high-temperature characteristics of the secondary battery may be improved.

In some embodiments, a content of the carbon-based particles 60, based on the total weight of the composite particles 50, may be 42.3 wt% to 58.7 wt%, 44.4 wt% to 51.7 wt%, 44.4 wt% to 50.5 wt%, 44.4 wt% to 49.2 wt%, or 44.4 wt% to 47.9 wt%. Within the above content range, the silicon-containing particles 70 may be sufficiently disposed on the surface of the carbon-based particles 60, and volume expansion of the silicon-containing particles 70 may be suppressed. Accordingly, the structural stability of the composite particles 50 may be improved, leading to enhanced lifespan characteristics and high-temperature characteristics of the secondary battery.

In some embodiments, the composite particle 50 may further include a carbon coating disposed on the carbon-based particles 60 and/or the silicon-containing particles 70.

In some embodiments, the composite particle 50 may further include a carbon coating (not shown) disposed on the silicon-containing particles 70. Accordingly, contact between the silicon of the anode active material and water or the electrolyte may be prevented. As a result, a reduction in the discharge capacity and capacity efficiency of the secondary battery may be suppressed until the formation of the anode after the anode active material is prepared.

In some embodiments, the carbon coating may also be disposed on a portion of the surface of the carbon-based particles 60 where the silicon-containing particle 70 is not disposed. For example, the carbon coating may entirely cover the carbon-based particles 60 and the silicon-containing particles 70. Accordingly, the mechanical stability and chemical stability of the anode active material may be enhanced.

In one embodiment, the carbon coating may include at least one of carbon and a conductive polymer. For example, the conductive polymer may include polyacetylene, polyaniline, polypyrrole, polythiophene and the like.

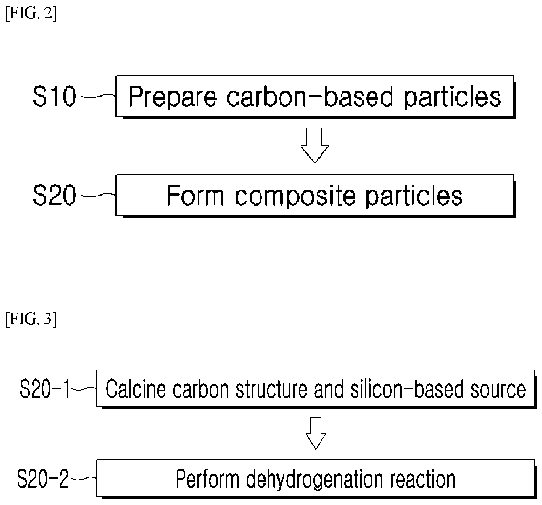

Hereinafter, a method for preparing the above-described anode active material for a lithium secondary battery according to exemplary embodiments will be described. FIGS. 2 and 3 are schematic flowcharts for describing processes in the method for preparing an anode active material for a lithium secondary battery according to exemplary embodiments. Specifically, FIG. 3 is a schematic process flowchart for describing the S20 process of FIG. 2 step-by-step.

Referring to FIG. 2, carbon-based particles may be prepared by performing a first heat treatment on a carbon source (e.g., S10 process). For example, the carbon source may be subjected to the first heat treatment to prepare carbon-based particles containing pores.

In some embodiments, the first heat treatment of the carbon source may include carbonizing or activating the carbon source to remove moisture and impurities. Accordingly, when the silicon source, which will be described below, is incorporated in the carbon structure, side reactions may be suppressed. Thus, by removing moisture and impurities, the silicon source may be stably moved and placed.

The carbon source may include, for example, glucose, sucrose, cellulose, petroleum pitch, coal pitch, biomass sources such as palm and rice bran, and resol oligomers, etc. These may be used alone or in combination of two or more thereof.

In one embodiment, an additive may be introduced simultaneously during the first heat treatment. For example, the additive may be provided as a chemical etchant or a hard template. For example, the reaction between the carbon source and the additive may be performed through a chemical activation method or physical etching. Accordingly, impurities and moisture in the carbon source may be removed. In addition, carbon-based particles containing pores may be prepared.

In one embodiment, the first heat treatment may be performed at 500 °C to 1,100 °C, 600 °C to 1,000 °C, or 650 °C to 900 °C. Within the above temperature range, moisture and impurities may be sufficiently removed, allowing the carbon source to be carbonized or activated.

In exemplary embodiments, composite particles may be formed by simultaneously calcining the carbon-based particles and the silicon-based source containing hydrogen (e.g., S20-1 process).

In some embodiments, the silicon-based source may include a compound represented by Formula 1 below. Accordingly, the silicon-based source may be disposed on the surface (e.g., the outer surface and/or the inner surface) and internal pores of the carbon structure at a relatively low temperature, thereby suppressing side reactions that may occur due to high-temperature reactions. Therefore, the lifespan characteristics and high-temperature characteristics of the secondary battery may be improved.

$$[Formula\ 1] \qquad SiH_wX_{1-w}$$

In Formula 1, X may be a halogen element, and w may be in a range of $0<w\leq 4$.

In one embodiment, the silicon-based source may include at least one of silane ($SiH_4$) and trichlorosilane ($SiHCl_3$). Accordingly, the silicon-based source may be more stably disposed on the surface (e.g., the outer surface and/or the inner surface) as well as within the internal pores of the carbon structure.

In some embodiments, the calcination may be performed under an atmosphere of an inert gas. In one embodiment, the calcination may be performed while injecting the silicon-based source and the inert gas simultaneously into the carbon structure. For example, after introducing the carbon structure into a calcination reactor, the calcination may be performed while injecting the silicon-based source and the inert gas simultaneously into the calcination reactor. For example, the inert gas may be used as a carrier gas.

For example, the inert gas may include argon (Ar), nitrogen ($N_2$), etc. For example, the inert gas may constitute 1 vol% to 15 vol%, 1 vol% to 10 vol%, or 2 vol% to 10 vol% in the total volume of the silicon-based source and the inert gas. Within the above range, the silicon-based source may be transported along with the inert gas to the outer surface of the carbon structure and the inner surface of the pores of the carbon structure.

According to exemplary embodiments, the calcination may be performed under a temperature condition of 400 °C to 550 °C.

If the calcination is performed at a temperature of less than 400 °C, the silicon source may not be sufficiently disposed on the carbon-based particles, thereby causing an excessive increase in specific surface area of the silicon particles. Therefore, cracks, etc. may occur in the anode active material due to the expansion of the silicon particles, and the lifespan characteristics and high-temperature characteristics of the secondary battery may deteriorate.

When performing the above-described calcination at a temperature exceeding 550 °C, the crystallinity of the silicon-containing particles may increase. Due to the increased crystallinity of the silicon-containing particles, the volume expansion rate during charging and discharging of the secondary battery may increase. Therefore, the lifespan characteristics of the secondary battery may deteriorate.

In some embodiments, the calcination may be performed at a temperature condition of 450 °C to 550 °C, 450 °C to 530 °C, or 450 °C to 500 °C. Within the above temperature range, the lifespan characteristics and high-temperature characteristics of the secondary battery may be further improved.

In one embodiment, the calcination may be performed at the above-described calcination temperature by increasing the temperature at a rate of 1 °C/min to 10 °C/min, 3 °C/min to 7 °C/min, or 4 °C/min to 6 °C/min. Within the above temperature increasing range, rapid temperature changes are prevented, thereby suppressing excessive high crystallinity in silicon included in the silicon-based source. As a result, the lifespan characteristics and high-temperature characteristics of the secondary battery may be improved.

According to exemplary embodiments, the calcination may be performed for 8 hours to 16 hours.

If the calcination is performed for less than 8 hours, the silicon source may not be sufficiently disposed on the carbon structure, such that the specific surface area of the silicon particles may excessively increase. Accordingly, side reactions between the composite particles and the electrolyte may occur, leading to a deterioration in the lifespan characteristics and high-temperature characteristics of the secondary battery.

If the calcination is performed for more than 16 hours, the silicon-based source may be excessively disposed on the carbon structure. Accordingly, the volume expansion rate due to silicon may increase during charging and discharging of the secondary battery, leading to a deterioration in the lifespan characteristics of the secondary battery.

In some embodiments, the calcination may be performed for 8 hours to 14 hours, 9 hours to 14 hours, or 10 hours to 14 hours. Within the above range, the lifespan characteristics and high-temperature characteristics of the secondary battery may be further improved.

Referring to FIG. 3, a dehydrogenation reaction may be performed on the composite particles (e.g., S20-2 process) after calcining the carbon structure and silicon-based source (e.g., S20-1 process).

In some embodiments, the dehydrogenation reaction may include performing a second heat treatment on the carbon-based particles in which the silicon-based source is disposed by the calcination in the reactor.

In some embodiments, the dehydrogenation reaction may be performed at the above-described calcination temperature.

In some embodiments, the dehydrogenation reaction may be performed for 2 hours to 6 hours, 3 hours to 6 hours, or 3 hours to 5 hours. Within the above time range, the hydrogen content may be controlled without excessively increasing the crystallinity of the silicon-containing particles. Accordingly, the volume expansion ratio of the composite particles may be reduced, leading to improved lifespan characteristics and high-temperature characteristics of the secondary battery.

In some embodiments, the dehydrogenation reaction (e.g., the second heat treatment) may be performed under conditions where the hydrogen content in the total volume within the reactor is 0.1 vol% or less, greater than 0 vol% and 0.1 vol% or less, or 0.01 vol% to 0.1 vol%. For example, the dehydrogenation reaction may be performed under an inert gas condition after the above-described calcination process. Accordingly, hydrogen disposed together with silicon in the carbon structure may be sufficiently removed.

Through the above-described method, an anode active material for a lithium secondary battery including composite particles with an adjusted H/Si ratio may be prepared.

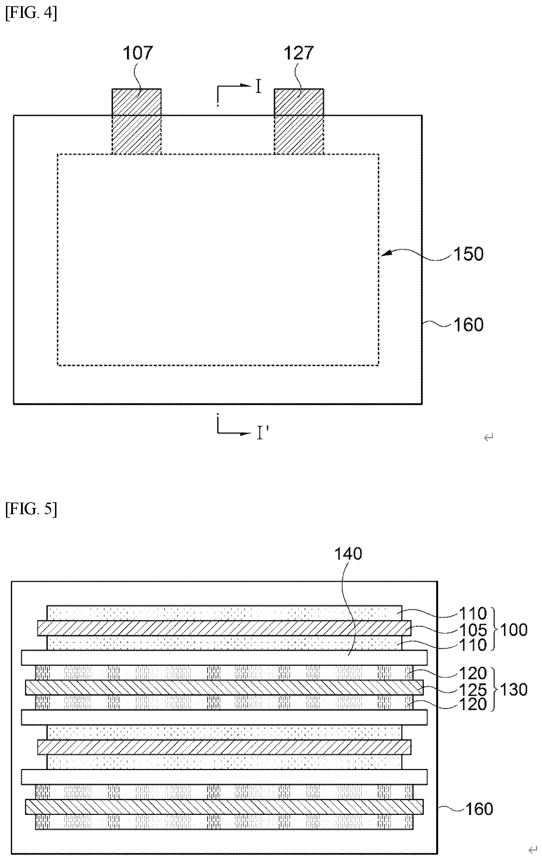

FIGS. 4 and 5 are a schematic plan view and a cross-sectional view illustrating a lithium secondary battery according to exemplary embodiments, respectively. For example, FIG. 5 is a cross-sectional view taken on line I-I' of FIG. 4 in a thickness direction of the lithium secondary battery.

The lithium secondary battery may include an anode 130 including the above-described anode active material and a cathode 100 disposed to face the anode 130.

The cathode 100 may include a cathode current collector 105, and a cathode active material layer 110 formed on at least one surface of the cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 to 50 μm.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 2 below.

[Formula 2] $Li_xNi_aM_bO_{2+z}$

In Formula 2, x, a, b and z may satisfy $0.9 \leq x \leq 1.2$, $0.6 \leq a \leq 0.99$, $0.01 \leq b \leq 0.4$, $-0.5 \leq z \leq 0.1$, As described above, M may include Co, Mn and/or Al.

The chemical structure represented by Formula 2 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 2 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 2.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 2-1 below.

[Formula 2-1] $Li_xNi_aM1_{b1}M2_{b2}O_{2+z}$

In Formula 2-1, M1 may include Co, Mn and/or Al. M2 may include the above-described auxiliary elements. In Formula 2-1, x, a, b1, b2 and z may satisfy $0.9 \leq x \leq 1.2$, $0.6 \leq a \leq 0.99$, $0.01 < bl+b2 \leq 0.4$, $-0.5 \leq z \leq 0.1$,

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to become incorporated into the bonding structure represented by Formula 2 or Formula 2-1 above.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increase, long-term storage stability and lifespan stability of the cathode or the secondary battery may be relatively decreased, and side reactions with the electrolyte may also be increased. However, according to exemplary embodiments, by including Co, the lifespan stability and capacity retention characteristics may be improved through Mn while maintaining electrical conductivity.

The content of Ni (e.g., a mole fraction of nickel based on a total number of moles of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may also include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a lithium rich layered oxide (LLO)/over lithiated oxide (OLO)-based active material, a manganese (Mn)-rich active material, or a cobalt (Co)-less active material, which have a chemical structure or crystal structure represented by Formula 3 below. These materials may be used alone or in combination of two or more thereof.

[Formula 3] $p[Li_2MnO_3] \cdot (1-p)[Li_qJO_2]$

In Formula 3, p and q may satisfy $0 < p < 1$, $0.9 \leq q \leq 1.2$, and J may include at least one element of Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 105, followed by drying and pressing the same to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may decrease and the amount of the cathode active material may relatively increase. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 $\mu$m to 50 $\mu$m.

The anode active material layer 120 may include the anode active material including the above-described composite particles 50. For example, the anode active material may include a plurality of composite particles 50. In one embodiment, the anode active material may be substantially composed of the composite particles 50.

The anode active material may be mixed in a solvent to prepare an anode slurry. The anode slurry may be applied/deposited to the anode current collector 125, followed by drying and pressing the same to prepare the anode active material layer 120. The coating may include a method such as gravure coating, slot die coating, simultaneous multilayer die coating, imprinting, doctor blade coating, dip coating, bar coating or casting, etc. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separation membrane 140 may be interposed between the cathode 100 and the anode 130. The separation membrane 140 may be configured to prevent an electrical short-circuit between the cathode 100 and the anode 130, and to allow a flow of ions to occur. For example, the separation membrane may have a thickness of 10 $\mu$m to 20 $\mu$m.

For example, the separation membrane 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, etc. of the separation membrane 140.

The electrode assembly 150 may be housed in a case 160 together with the electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(F SO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

As illustrated in FIG. 5, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

**Examples and Comparative Examples**

**Example 1**

Preparation of composite particles

Activated carbon as a carbon source was subjected to a first heat treatment at a temperature of 800 °C to prepare carbon-based particles. 1.5 kg of the prepared carbon-based particles were introduced into a CVD reactor.

A mixed gas of silane gas as a silicon-based source and argon gas as an inert gas was injected into the CVD reactor at a flow rate of 5 mL/min to 25 mL/min. The content of argon gas relative to the total volume of the mixed gas was 93 vol%, and the introduction temperature and introduction pressure of the mixed gas were 0 °C and 1 atm, respectively.

Thereafter, the temperature was increased to 450 °C at a rate of 5 °C/min, and then maintained at this temperature for 8 hours to prepare composite particles including silicon-containing particles.

Preparation of anode

95.5 wt% of the prepared composite particles as an anode active material, 1 wt% of CNT as a conductive material, 2 wt% of styrene-butadiene rubber (SBR) as a binder, and 1.5 wt% of carboxymethyl cellulose (CMC) as a thickener were mixed to obtain an anode slurry.

The anode slurry was applied to a copper substrate, followed by drying and pressing the same to prepare an anode.

Preparation of cathode

$LiNi_{0.6}Co_{0.2}Mn_{0.2}O_2$ as an active material, Denka Black as a conductive material, and polyvinylidene fluoride (PVDF) as a binder were mixed in a weight ratio of 92:5:3 to prepare a cathode slurry.

The cathode slurry was uniformly applied to an aluminum foil, followed by drying and pressing the same to prepare a cathode.

Manufacturing of lithium secondary battery

The cathode and the anode prepared as described above were respectively cut into a predetermined size and stacked, then an electrode cell was fabricated by interposing a separator (polyethylene, thickness: 15 $\mu$m) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tabs was included in the sealing part. After injecting the electrolytes through the remaining side except for the sealing part, and the remaining side was also sealed, followed by impregnation for 12 hours or more to manufacture a lithium secondary battery.

A solution, prepared by dissolving 1M $LiPF_6$ solution in a mixed solvent of EC/EMC/DEC (25/45/30; volume ratio) and adding 3 wt% of fluoroethylene carbonate (FEC), 1 wt% of 1,3-propenesultone (PRS) and 0.5 wt% of lithium bis(oxalato)borate (LiBOB) thereto, was used as the electrolyte.

Then, pre-charging was performed on the lithium secondary battery for 36 minutes at a current (2.5 A) corresponding to 0.25 C. After 1 hour, degassing and aging were performed for 24 hours or more, then formation charging and discharging was performed (charging conditions: CC-CV 0.2C 4.2V 0.05C CUT-OFF, discharging conditions: CC 0.2C 2.5V CUT-OFF). Thereafter, standard charging and discharging was performed (charging conditions: CC-CV 0.5C 4.2V 0.05C CUT-OFF, discharging conditions: CC 0.5C 2.5V CUT-OFF).

**Examples 2 to 14 and Comparative Examples 1 to 10**

Lithium secondary batteries were manufactured in the same manner as in Example 1, except that the calcination temperature, calcination time, whether to perform the dehydrogenation reaction, and the dehydrogenation performance time were changed as shown in Table 1 below.

Dehydrogenation reaction

In preparation of composite particles, after the calcination process, a gas obtained by mixing argon gas and nitrogen gas in a 1:1 ratio at the same temperature as the calcination temperature was injected into the CVD reactor at a flow rate of 5 mL/min to 25 mL/min to perform a dehydrogenation reaction.

[TABLE 1]

|  | Calcination temperature (°C) | Calcination time (hr) | Dehydrogenation reaction | |
|---|---|---|---|---|
|  |  |  | Whether reaction performed | Reaction time (hr) |
| Example 1 | 450 | 8 | No | - |
| Example 2 | 450 | 12 | No | - |
| Example 3 | 450 | 12 | Yes | 4 |
| Example 4 | 450 | 16 | No | - |
| Example 5 | 500 | 8 | No | - |
| Example 6 | 500 | 12 | No | - |

(continued)

| | Calcination temperature (°C) | Calcination time (hr) | Dehydrogenation reaction | |
|---|---|---|---|---|
| | | | Whether reaction performed | Reaction time (hr) |
| Example 7 | 500 | 12 | Yes | 4 |
| Example 8 | 500 | 16 | No | - |
| Example 9 | 550 | 8 | No | - |
| Example 10 | 550 | 8 | Yes | 4 |
| Example 11 | 550 | 12 | No | - |
| Example 12 | 530 | 12 | No | - |
| Example 13 | 530 | 16 | No | - |
| Example 14 | 530 | 8 | No | - |
| Comparative Example 1 | 300 | 8 | No | - |
| Comparative Example 2 | 350 | 4 | No | - |
| Comparative Example 3 | 350 | 8 | No | - |
| Comparative Example 4 | 350 | 12 | No | - |
| Comparative Example 5 | 350 | 16 | No | - |
| Comparative Example 6 | 350 | 16 | No | - |
| Comparative Example 7 | 350 | 24 | Yes | 4 |
| Comparative Example 8 | 550 | 24 | No | - |
| Comparative Example 9 | 600 | 8 | No | - |
| Comparative Example 10 | 600 | 8 | Yes | 8 |

**Evaluation Example**

(1) Measurement of silicon content and hydrogen content of composite particles

The silicon content and hydrogen content based on the total weight of the composite particles prepared according to the above-described examples and comparative examples were measured.

The silicon content was measured using 5800 ICP-OES (Agilent), and the hydrogen content was measured using ONH 836 (LECO).

The measured silicon contents and hydrogen contents are shown in Table 2 below.

(2) Calculation of H/Si ratio

The H/Si ratio was calculated by substituting the measured silicon content and hydrogen content into Equation 2 below.

[Equation 2]

$$\frac{H}{Si} \text{ ratio } (\%) = \frac{R_H}{R_{Si}} \times 100$$

In Equation 2, $R_H$ is the content of hydrogen (wt%) based on the total weight of the composite particles, and $R_{Si}$ is the content of silicon (wt%) based on the total weight of the composite particles.

The calculated H/Si ratios are shown in Table 2 below.

[TABLE 2]

|  | Silicon content (wt%) | Hydrogen content (wt%) | H/Si ratio (%) |
|---|---|---|---|
| Example 1 | 42 | 2.2 | 5.2 |
| Example 2 | 49 | 2.5 | 5.1 |
| Example 3 | 51 | 1.7 | 3.3 |
| Example 4 | 53 | 2.6 | 4.9 |
| Example 5 | 45 | 1.7 | 3.8 |
| Example 6 | 51 | 1.8 | 3.5 |
| Example 7 | 51 | 0.6 | 1.2 |
| Example 8 | 59 | 2.0 | 3.4 |
| Example 9 | 49 | 0.8 | 1.6 |
| Example 10 | 52 | 0.3 | 0.6 |
| Example 11 | 56 | 2.6 | 4.6 |
| Example 12 | 47 | 1.0 | 2.1 |
| Example 13 | 55 | 2.7 | 4.9 |
| Example 14 | 48 | 0.5 | 1.0 |
| Comparative Example 1 | 0 | - | - |
| Comparative Example 2 | 22 | 1.5 | 6.8 |
| Comparative Example 3 | 31 | 2.2 | 7.1 |
| Comparative Example 4 | 38 | 2.8 | 7.4 |
| Comparative Example 5 | 39 | 2.8 | 7.2 |
| Comparative Example 6 | 40 | 2.9 | 7.3 |
| Comparative Example 7 | 40 | 2.9 | 7.3 |
| Comparative Example 8 | 57 | 0.2 | 0.4 |
| Comparative Example 9 | 57 | 0.1 | 0.2 |
| Comparative Example 10 | 62 | 0.2 | 0.3 |

Referring to Table 2, in the examples, where calcination was performed at temperatures of 400 °C to 550 °C for 8 to 16 hours, the H/Si ratio was 0.5% to 5.3%.

In Comparative Example 1, where the calcination temperature was reduced to 300 °C, no silicon was deposited.

In Comparative Examples 2 to 7, where calcination was performed at temperatures below 400 °C, the H/Si ratio was 6.8% or more.

In Comparative Examples 8 to 10, where calcination was performed at temperatures exceeding 550 °C or for a long period of time, the H/Si ratio was 0.4% or less.

**Experimental Example**

(1) Evaluation of room-temperature (25 °C) lifespan characteristics

After repeatedly charging (CC-CV 0.5C 4.2V 0.05C CUT-OFF) and discharging (CC 0.5C 2.75V CUT-OFF) the lithium secondary batteries prepared according to the above-described examples and comparative examples 50 times, the room-temperature lifespan characteristic (%) was determined by calculating the discharge capacity at 50th cycle as a percentage (%) based on the discharge capacity at the 1st cycle.

Room-temperature lifespan characteristic (%) = (Discharge capacity at 50th cycle/Discharge capacity at 1st cycle) $\times$ 100

<Standards for evaluation>

Very poor: Room-temperature lifespan characteristics < 70%
Poor: 70% ≤ Room-temperature lifespan characteristics < 80%
Average: 80% ≤ Room-temperature lifespan characteristics < 93%
Excellent: 93% ≤ Room-temperature lifespan characteristics
Evaluation results of the room-temperature lifespan characteristics are shown in Table 3 below.

(2) Evaluation of high-temperature (60 °C) storage capacity retention rate

The lithium secondary batteries manufactured according to the above-described examples and comparative examples were charged to 100% of state of charge (SOC) (CC-CV 0.5C, 4.2V 0.1C CUT-OFF), and stored in a chamber at 60 °C. After 8 weeks of storage, the discharge capacity was measured in a chamber at 25 °C, and the high-temperature storage capacity retention rate (%) was determined compared to the initial discharge capacity.

<Standards for evaluation>

Very poor: High-temperature storage capacity retention rate < 50%
Poor: 50% ≤ High-temperature storage capacity retention rate < 80%
Average: 80% ≤ High-temperature storage capacity retention rate < 88%
Excellent: 88% ≤ High-temperature storage capacity retention rate
Evaluation results of the high-temperature storage retention rates are also shown in Table 3 below.

[TABLE 3]

| Type | Evaluation results of room-temperature lifespan characteristics | Evaluation results of high-temperature storage capacity retention rate |
|---|---|---|
| Example 1 | Average | Average |
| Example 2 | Average | Excellent |
| Example 3 | Excellent | Excellent |
| Example 4 | Excellent | Excellent |
| Example 5 | Excellent | Average |
| Example 6 | Excellent | Excellent |
| Example 7 | Excellent | Excellent |
| Example 8 | Average | Excellent |
| Example 9 | Excellent | Excellent |
| Example 10 | Excellent | Excellent |
| Example 11 | Average | Average |
| Example 12 | Average | Average |
| Example 13 | Average | Average |
| Example 14 | Average | Average |
| Comparative Example 1 | Very poor | Very poor |
| Comparative Example 2 | Very poor | Very poor |
| Comparative Example 3 | Poor | Very poor |
| Comparative Example 4 | Average | Poor |

(continued)

| Type | Evaluation results of room-temperature lifespan characteristics | Evaluation results of high-temperature storage capacity retention rate |
|---|---|---|
| Comparative Example 5 | Average | Poor |
| Comparative Example 6 | Average | Poor |
| Comparative Example 7 | Average | Poor |
| Comparative Example 8 | Poor | Excellent |
| Comparative Example 9 | Poor | Average |
| Comparative Example 10 | Very poor | Average |

Referring to Table 3, in the examples, where the H/Si ratio was 0.5% to 5.3%, the room-temperature lifespan characteristics were 80% or more, and the high-temperature storage capacity retention rate was 80% or more.

In Example 3, where the dehydrogenation reaction was performed, the room-temperature lifespan characteristics and the high-temperature storage capacity retention rate increased compared to Example 2, where all other conditions were maintained the same.

In Comparative Example 1, where the calcination temperature was reduced to 300 °C, no silicon was deposited. As a result, the room-temperature lifespan characteristics were less than 70% and the high-temperature storage characteristics were less than 50%.

In Comparative Examples 2 and 3, where the H/Si ratio was 6.8% to 7.1%, the room-temperature lifespan characteristics were less than 80% and the high-temperature storage capacity retention rate was less than 50%.

In Comparative Examples 4 to 7, where the H/Si ratio was 7.2% or more, the high-temperature storage capacity retention rate was less than 80%.

In Comparative Examples 8 to 10, where the H/Si ratio was less than 0.5%, the room-temperature lifespan characteristics were less than 80%.

In Comparative Example 10, where the dehydrogenation reaction time was increased to 8 hours, the lifespan characteristics deteriorated.

**Claims**

1. An anode active material for a lithium secondary battery comprising:

   composite particles which comprise carbon-based particles and silicon-containing particles including silicon and hydrogen disposed on the surface of the carbon-based particles,
   wherein an H/Si ratio of the composite particle, defined by Equation 2 below, is 0.5% to 5.3%:

   $$[\text{Equation 2}]$$
   $$\frac{\text{H}}{\text{Si}} \text{ ratio } (\%) = \frac{R_H}{R_{Si}} \times 100$$

   (in Equation 2, $R_H$ is a content (% by weight) of hydrogen based on a total weight of the composite particles, and $R_{Si}$ is a content (% by weight) of silicon based on the total weight of the composite particles).

2. The anode active material for a lithium secondary battery according to claim 1, wherein the H/Si ratio is 1.2% to 4.9%.

3. The anode active material for a lithium secondary battery according to claim 1 or 2, wherein the content of silicon, based on the total weight of the composite particles, is 41 wt% to 55 wt%.

4. The anode active material for a lithium secondary battery according to any one of claims 1 to 3, wherein the content of hydrogen, based on the total weight of the composite particles, is 0.3 wt% to 2.7 wt%.

5. The anode active material for a lithium secondary battery according to any one of claims 1 to 4, wherein the silicon-containing particles comprise $SiH_x$ (0<x≤4).

6. The anode active material for a lithium secondary battery according to any one of claims 1 to 5, wherein the silicon-containing particles comprise an amorphous silicon-based compound, and
the carbon-based particles have an amorphous structure.

7. The anode active material for a lithium secondary battery according to any one of claims 1 to 6, wherein the carbon-based particles include pores.

8. The anode active material for a lithium secondary battery according to claim 7, wherein the pores of the carbon-based particles have a shape which is recessed from the outermost portion of the carbon-based particles into an interior of the carbon-based particles.

9. The anode active material for a lithium secondary battery according to any one of claims 1 to 8, wherein the surface of the carbon-based particles includes an outer surface and/or an inner surface of the carbon-based particles.

10. The anode active material for a lithium secondary battery according to any one of claims 1 to 9, wherein the composite particles further comprise a carbon coating disposed on the carbon-based particles and/or silicon-containing particles.

11. A lithium secondary battery comprising:

an anode which comprises the anode active material for a secondary battery according to any one of claims 1 to 10; and
a cathode disposed to face the anode.

12. A method for preparing an anode active material for a lithium secondary battery, the method comprising:

preparing carbon-based particles by performing a first heat treatment on a carbon source; and
forming composite particles by calcining the carbon-based particles and a silicon-based source containing silicon and hydrogen at 400 °C to 550 °C for 8 to 16 hours.

13. The method according to claim 12, wherein the silicon-based source comprises a compound represented Formula 1 below or at least one of silane ($SiH_4$) and trichlorosilane ($SiHCl_3$):

[Formula 1]　　　　　$SiH_wX_{1-w}$

(in Formula 1, X is a halogen element, and w is in a range of $0<w\leq4$).

14. The method according to claim 12 or 13, further comprising performing a dehydrogenation reaction after the calcination.

15. The method according to any one of claims 12 to 15, wherein the dehydrogenation reaction comprises performing a second heat treatment within a reactor,
wherein the second heat treatment is performed under conditions where a hydrogen content in a total volume within the reactor is 0.1 vol% or less.

[FIG. 1]

[FIG. 2]

S10 —| Prepare carbon-based particles |

⇩

S20 —| Form composite particles |

[FIG. 3]

S20-1 —| Calcine carbon structure and silicon-based source |

⇩

S20-2 —| Perform dehydrogenation reaction |

[FIG. 4]

[FIG. 5]

Europäisches
Patentamt
European
Patent Office
Office européen
des brevets

## EUROPEAN SEARCH REPORT

**Application Number**

EP 25 17 5151

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 558 888 A (CHANGZHOU GUIYUAN NEW ENERGY MAT CO LTD) 13 February 2024 (2024-02-13) | 1-5,7-11 | INV. H01M4/38 H01M4/133 |
| Y | * claims 1-3,11 * * examples 2-6, 9-17; table 1 * * paragraph [0058] - paragraph [0061] * * paragraphs [0043], [0136], [0195] * * paragraphs [0093], [0096] * * paragraph [0099] * * paragraphs [0101], [0105] * * paragraph [0142] - paragraph [0157] * * paragraph [0166] * * paragraph [0168] - paragraph [0180] * ----- | 6,12-15 | C01B25/00 H01M4/134 H01M4/36 H01M4/587 H01M4/62 H01M10/0525 C01B32/05 C01B33/027 ADD. H01M4/02 |
| X | CN 115 425 281 A (NINGDE AMPEREX TECHNOLOGY LTD) 2 December 2022 (2022-12-02) | 1-5,7-9, 11 | |
| Y | * claim 1 * * paragraph [0110] - paragraph [0115]; examples 2,8,9,11; table 2 * * paragraph [0010] * * paragraphs [0028], [0082] * * paragraphs [0030], [0114], [0143] * * paragraph [0117] * * paragraphs [0139], [0148] * ----- | 6,10, 12-15 | |

**TECHNICAL FIELDS SEARCHED (IPC)**

H01M
C01B

| Category | Citation | Relevant to claim | |
|---|---|---|---|
| Y | US 2023/223537 A1 (KAWAGUCHI NAOTO [JP] ET AL) 13 July 2023 (2023-07-13) * paragraph [0043] * * paragraph [0077] - paragraph [0094] * * paragraph [0109] * ----- | 6,10, 12-15 | |

The present search report has been drawn up for all claims

| Place of search | Date of completion of the search | Examiner |
|---|---|---|
| The Hague | 19 August 2025 | Al-Kutubi, Hanan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 5151

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | | Publication date | Patent family member(s) | | Publication date |
|---|---|---|---|---|---|
| CN 117558888 | A | 13-02-2024 | CN | 117558888 A | 13-02-2024 |
| | | | CN | 119275269 A | 07-01-2025 |
| | | | WO | 2025103346 A1 | 22-05-2025 |
| CN 115425281 | A | 02-12-2022 | NONE | | |
| US 2023223537 | A1 | 13-07-2023 | CN | 115668545 A | 31-01-2023 |
| | | | EP | 4160726 A1 | 05-04-2023 |
| | | | JP | 7405249 B2 | 26-12-2023 |
| | | | JP | WO2021241754 A1 | 02-12-2021 |
| | | | KR | 20230017259 A | 03-02-2023 |
| | | | US | 2023223537 A1 | 13-07-2023 |
| | | | WO | 2021241754 A1 | 02-12-2021 |

EPO FORM P0459

For more details about this annex : see Official Journal of the European Patent Office, No. 12/82